# FASCICULE DE BREVET EUROPEEN

(11) **EP 2 863 493 B1**
(45) Date de publication et mention de la délivrance du brevet: **13.11.2019**
(21) Numéro de dépôt: 14197595.3
(22) Date de dépôt: 15.05.2012
(51) Int. Cl.: H01R 13/66, H01R 13/717, H01R 13/703, H01R 105/00, H01R 103/00, G02B 6/38

(54) **Prise électrique munie de moyens d'identification**
Elektrische Steckdose, die mit Identifizierungsmitteln ausgestattet ist
Electrical connector provided with identification means

(30) Priorité: 29.06.2011 FR 1102016
(43) Date de publication de la demande: 22.04.2015
(62) Demande divisionnaire de: 12731513.3
(73) Titulaire: Legrand France, 87000 Limoges (FR); Legrand SNC, 87000 Limoges (FR)
(72) Inventeur: Valadas, Vincent, 87240 Ambazac (FR); Chaumeny, Jean-Luc, 87110 Solignac (FR)
(74) Mandataire: Jacobacci Coralis Harle

(56) Documents cités:
- JP-A- H03 149 776
- KR-A- 20020 080 766
- US-B1- 7 329 128

## Description

### DOMAINE TECHNIQUE AUQUEL SE RAPPORTE L'INVENTION

La présente invention concerne de manière générale le domaine des prises électriques.

Elle concerne plus particulièrement le domaine des prises électriques présentant des caractéristiques intrinsèques données pour être adaptées à délivrer en permanence sans être endommagées un signal électrique qui dépend des caractéristiques intrinsèques de la prise électrique et qui présente une intensité maximale déterminée.

L'invention trouve une application particulièrement avantageuse dans la réalisation d'une prise électrique dédiée au chargement d'accumulateurs électriques d'une batterie d'un véhicule automobile électrique et qui délivre un courant d'intensité maximale égale à 16 Ampères.

### ARRIERE-PLAN TECHNOLOGIQUE

Le chargement de la batterie d'un véhicule automobile nécessite le passage dans cette batterie d'un courant typiquement égal à 14 Ampères pendant plusieurs heures.

Pour des questions pratiques, il est donc avantageux pour l'utilisateur de brancher la batterie de son véhicule automobile sur une prise électrique domestique standard normalisée à 16 Ampères.

Ce type de prise électrique présente théoriquement des caractéristiques intrinsèques lui permettant de délivrer un courant d'intensité inférieure ou égale à 16 Ampères pendant une durée normalisée.

Cependant, ce type de prise électrique répond à des exigences normatives définies pour des utilisations domestiques courantes pour lesquelles l'intensité du courant délivré est dans la plupart des cas inférieure à 14 ou 16 Ampères, avec des fréquences et des durées de sollicitations inférieures à celles nécessaires pour le chargement de la batterie d'un véhicule automobile.

En outre, en pratique, les caractéristiques intrinsèques des prises électriques installées au domicile des utilisateurs peuvent varier d'une prise à l'autre, et peuvent également varier dans le temps. Il est impossible de connaître avec certitude ces caractéristiques.

Il est également possible que l'utilisateur soit confronté à une prise ne répondant pas à la norme.

Une telle incertitude sur les caractéristiques intrinsèques de la prise et donc sur son aptitude à délivrer un courant de 14 Ampères ou plus pendant plusieurs heures, de manière régulière, n'est pas acceptable car elle met en jeu la sécurité des personnes et des installations.

Une nouvelle application domestique comme la charge d'un véhicule électrique peut solliciter les prises électriques aux limites des caractéristiques normatives et par conséquent nécessite une connaissance précise de la nature et de la qualité de la prise électrique utilisée afin de tirer profit des capacités maximum de cette prise électrique sans l'endommager et notamment de l'intensité maximale que la prise électrique est adaptée à délivrer en permanence sans être endommagée.

La prise électrique décrite dans le document FR2943468 apporte une première réponse à ce problème en ce qu'elle comporte des moyens d'identification pour fournir à l'utilisateur un signal de contrôle représentatif d'une donnée de l'appareil connecté sur cette prise. Ce signal de contrôle est un signal lumineux indiquant à l'utilisateur que la prise n'est pas adaptée à l'appareil.

Un inconvénient de cette prise électrique est qu'elle ne peut indiquer directement à l'appareil branché sur elle des informations concernant le signal électrique délivré par la prise.

L'appareil ne peut donc pas adapter son fonctionnement à la prise sur laquelle il est branché.

En outre, la sécurité des installations et des personnes n'est pas garantie car un utilisateur distrait peut connecter un appareil inadapté sur la prise électrique.

On connaît des documents FR2949280 et WO2007/072581 des ensembles électriques comportant une prise électrique et une fiche électrique comportant des moyens permettant à la prise de reconnaître la fiche pour autoriser le passage du signal électrique de la prise vers la fiche.

On connaît également des documents EP2230729 et EP0448084 des ensembles électriques comportant une prise électrique et une fiche électrique comportant des moyens permettant à la prise de reconnaître une absence de contact ou un défaut de contact électrique entre cette prise et la fiche associée.

Cependant, aucun de ces ensembles ne permet à la prise électrique de générer un signal renseignant la fiche électrique sur l'intensité maximale que cette prise est adaptée à délivrer sans être endommagée.

Le document US 7 329 128 décrit un connecteur comprenant une fiche et une prise dans lesquelles des aimants sont disposés de manière à s'attirer lorsque la fiche et la prise ont un positionnement relatif correct et à se repousser lorsque la fiche et la prise sont à distance de cepositionnement correct.

Le document KR 2002-0080 766 décrit un dispositif de connexion dans lequel une fiche comprend d'une part des aimants destinés à coopérer avec des aimants correspondants de la prise pour assurer le maintien de la fiche dans la prise et d'autre part des aimants destinés à activer des commutateurs de sécurité situés dans la fiche.

Le document JPH 03-149 776 décrit une fiche comprenant une unité de configuration d'une information de charge constituée par une pluralité d'aimants permanents et une prise comprenant une unité d'identification d'une information de charge constituée par une pluralité de circuits de détection.

### OBJET DE L'INVENTION

La présente invention propose un nouveau type de prise électrique adaptée à communiquer avec la fiche électrique de l'appareil électrique qui est connectée sur cette prise électrique.

Plus particulièrement, on propose selon l'invention une prise électrique selon la revendication 1.

Ainsi, la prise électrique communique ou coopère directement avec la fiche électrique connectée sur elle pour lui fournir un signal de contrôle qu'elle peut acheminer à l'appareil électrique pour que celui-ci modifie son fonctionnement en fonction de l'intensité maximal du signal électrique délivré par la prise électrique sans que celle-ci soit endommagée.

Ce signal de contrôle est déterminé en fonction du signal électrique délivré par la prise. Le signal électrique délivré dépend de l'intensité maximale que la prise électrique peut délivrer sans être endommagée, mais il peut également dépendre d'autres caractéristiques intrinsèques de la prise, qui seront exposées plus en détails ultérieurement.

D'autres caractéristiques non limitatives et avantageuses de la prise électrique conforme à l'invention sont présentées dans la revendication dépendante 2.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une représentation schématique d'une prise selon l'invention et
- la figure 2 est une représentation schématique de la fiche électrique de la figure 1 et d'une prise électrique classique,
- la figure 3 est une représentation schématique d'une prise électrique et d'une fiche électrique utile à la compréhension de l'invention,
- la figure 4 est une représentation schématique d'une prise électrique et d'une fiche électrique utile à la compréhension de l'invention,
- la figure 5 est une représentation schématique d'une prise électrique et d'une fiche électrique utile à la compréhension de l'invention,
- la figure 6 est une représentation schématique d'une prise électrique et d'une fiche électrique utile à la compréhension de l'invention,
- la figure 7 est une vue schématique en perspective avant d'un exemple de prise électrique de standard franco-belge utile à la compréhension de l'invention,
- la figure 8 est une vue schématique en perspective arrière de la prise électrique de la figure 7 sans son boîtier,
- la figure 9 est une vue schématique de face de la prise électrique de la figure 7,
- la figure 10 est une vue schématique en coupe selon l'axe A-A de la prise électrique de la figure 9,
- la figure 11 est une vue schématique en coupe selon l'axe C-C de la prise électrique de la figure 9,
- la figure 12 est une vue schématique en perspective avant d'une fiche électrique adaptée à coopérer avec la prise électrique de la figure 7, avec un arraché partiel d'une partie avant de cette fiche électrique,
- la figure 13 est une vue schématique de profil de la fiche électrique de la figure 12, avec un arraché partiel d'une partie avant de cette fiche électrique,
- la figure 14 est une vue schématique en perspective d'une partie interne de la fiche électrique des figures 12 et 13,
- la figure 15 est une vue schématique d'un exemple alternatif de la fiche électrique des figures 12 à 14,
- la figure 16 est une vue schématique en perspective arrière d'une prise électrique représentée sans boîtier, selon une variante de l'exemple de prise électrique de standard franco-belge représenté à la figure 7,
- la figure 17 est une vue en perspective d'une prise électrique et d'une fiche électrique conformes à l'exemple de la figure 3, conforme au standard franco-belge,
- la figure 18 est une vue en perspective d'une prise électrique et d'une fiche électrique conformes à l'exemple de la figure 4, conforme au standard franco-belge,
- la figure 19 est une vue en coupe longitudinale de la prise électrique de la figure 18,
- la figure 20 est une vue schématique en perspective avant d'un exemple de prise électrique conforme au standard allemand « schuko » selon le mode de réalisation précité,
- la figure 21 est une vue schématique de face de la prise électrique de la figure 20,
- la figure 22 est une vue schématique en coupe selon le plan D-D de la prise électrique de la figure 21,
- la figure 23 est une vue schématique éclatée d'une partie de la prise électrique de la figure 20,
- la figure 24 est une vue schématique en perspective avec un arraché d'une fiche électrique adaptée à coopérer avec la prise électrique de la figure 20,
- la figure 25 est une vue schématique de la face avant d'un exemple de prise électrique conforme au standard américain utile à la compréhension de l'invention,
- la figure 26 est une vue schématique en coupe selon le plan E-E de la prise électrique de la figure 25,
- la figure 27 est une vue schématique éclatée d'une partie de la prise électrique de la figure 25,
- la figure 28 est une vue schématique en perspective avec un arraché d'une fiche électrique adaptée à coopérer avec la prise électrique de la figure 25,
- la figure 29 est une vue schématique en coupe de la fiche de la figure 28.

En préliminaire, on notera que, d'une figure à l'autre, les éléments identiques ou similaires des différents exemples présentés seront dans la mesure du possible référencés par les mêmes signes de référence ou des signes de référence correspondants et ne seront pas décrits à chaque fois.

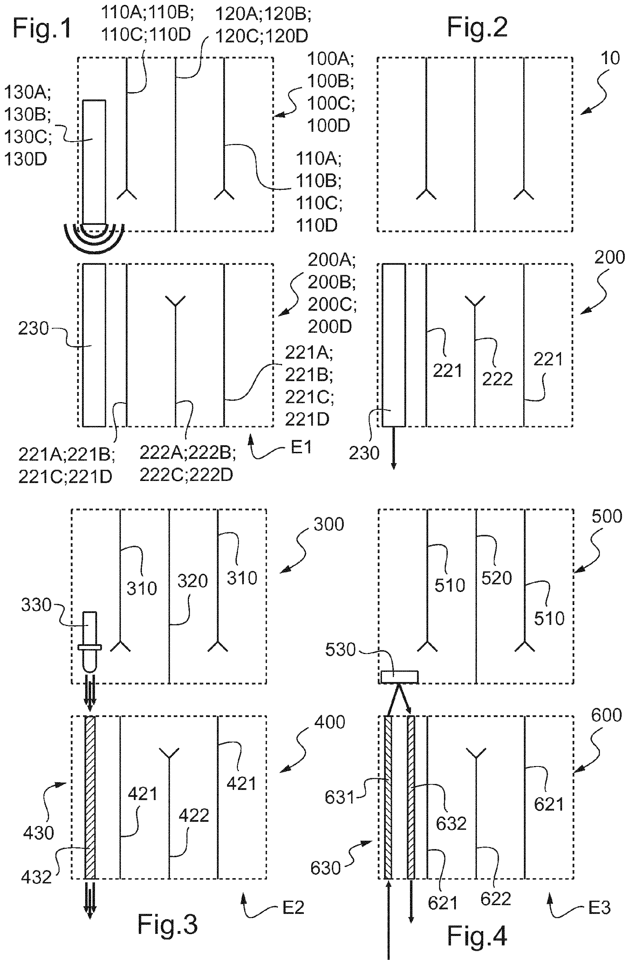

Les figures 1 et 3 à 6 montrent sous la forme d'un schéma de principe cinq exemples de réalisation d'un ensemble électrique E1 ; E2 ; E3 ; E4 ; E5.

Chaque ensemble électrique E1 ; E2 ; E3 ; E4 ; E5 comporte une prise électrique 100A ; 100B ; 100C ; 100D ; 300 ; 500 ; 700, 900 et une fiche électrique 200A ; 200B , 200C ; 200D ; 400; 600 ; 800 ; 1000.

On a représenté sur la figure 2 la fiche conforme à l'invention et une prise électrique classique 10 n'appartenant pas à l'invention.

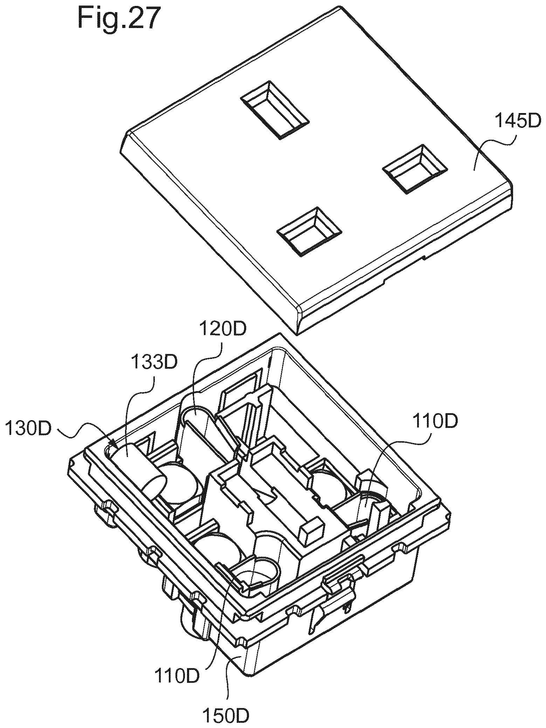

On a représenté sur les figures 1 à 11, 16 à 23 et 25 à 27 plusieurs modes de réalisation d'une prise électrique.

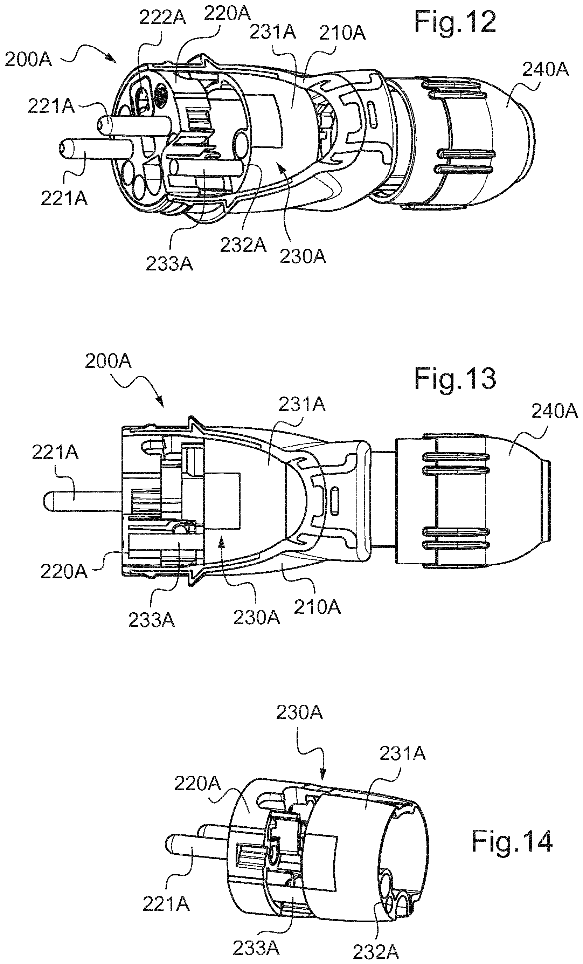

On a représenté sur les figures 12 à 15, 17, 18, 19, 24, 28 et 29 plusieurs modes de réalisation d'une fiche électrique.

La prise électrique 100A ; 100B ; 100C ; 100D ; 300 ; 500 ; 700 ; 900 est adaptée à délivrer en permanence un signal électrique sans être endommagée.

Ce signal électrique présente des caractéristiques prédéterminées, qui dépendent des caractéristiques intrinsèques physiques de la prise ainsi que de la source d'alimentation de la prise électrique.

Le signal électrique délivré par la prise électrique peut être caractérisé par l'intensité du courant délivré en Ampères, par la tension prise aux bornes de la prise électrique en Volts ou encore la fréquence du signal électrique alternatif en Hertz ou la puissance de ce signal électrique. Cette caractéristique peut être notamment toute grandeur physique liée à ce signal électrique délivré par la prise électrique.

On entend ici par caractéristiques intrinsèques de la prise électrique notamment les caractéristiques physiques qui déterminent l'échauffement et la tenue à la chaleur de la prise électrique lors de son fonctionnement.

Il s'agit par exemple de la résistance interne de la prise électrique, de sa géométrie et des matériaux isolants et conducteurs utilisés pour la fabriquer.

L'intensité maximale du courant que la prise électrique est adaptée à délivrer dépend notamment de ces caractéristiques intrinsèques de la prise.

On entend par intensité maximale l'intensité maximale du signal électrique que peut délivrer la prise électrique pendant un temps déterminé sans être endommagée. Pendant ce temps déterminé, la prise électrique délivre en permanence le courant électrique. Le temps déterminé dont il s'agit ici correspond au moins à la durée habituelle de chargement d'une batterie de véhicule automobile, durée comprise entre 4 et 24 heures.

Naturellement, il est possible de prévoir des moyens de coupure du courant électrique dans ladite prise électrique.

De manière remarquable, selon l'invention, cette prise électrique 100A ; 100B ; 100C ; 100D ; 300 ; 500 ; 700 ; 900 comporte des moyens d'identification 130A ; 130B ; 130C ; 130D ; 330 ; 530 ; 730 ; 930 adaptés à communiquer ou à coopérer avec la fiche électrique 200A ; 200B ; 200C ; 200D ; 400 ; 600 ; 800 ; 1000 pour lui fournir un signal de contrôle représentatif de l'intensité maximale du courant que la prise électrique est adaptée à délivrer sans être endommagée.

Ce signal de contrôle dépend alors des caractéristiques intrinsèques de la prise électrique qui détermine cette intensité maximale.

Il peut également dépendre de l'intensité du courant délivré à un instant donné, de la tension prise aux bornes de la prise électrique, de la fréquence du signal électrique alternatif, ou de la puissance de ce signal électrique.

Ainsi, la prise électrique selon l'invention est adaptée à transmettre à la fiche électrique branchée sur elle, un signal de contrôle qui lui indique quelle est l'intensité maximale du courant délivré par ladite prise électrique, sans que la prise électrique soit endommagée. La fiche électrique selon l'invention est adaptée à communiquer avec la prise électrique pour recevoir ou générer ce signal de contrôle et à le transmettre à l'appareil électrique branché à la fiche électrique.

L'appareil électrique peut alors être programmé pour adapter son fonctionnement en fonction du signal de contrôle transmis par la prise électrique.

La prise électrique selon l'invention présente plus particulièrement des caractéristiques intrinsèques adaptées au passage d'un courant d'intensité inférieur ou égale à 16 Ampères en permanence, cette valeur constituant alors l'intensité maximale délivrée par cette prise.

L'appareil électrique relié à la fiche électrique selon l'invention est par exemple un véhicule automobile électrique.

Il s'agit en particulier d'une prise électrique dédiée au chargement d'accumulateurs d'une batterie d'un véhicule automobile électrique. La prise électrique selon l'invention est notamment adaptée à délivrer un courant de charge égal à 14 Ampères.

Dans cet exemple, le signal de contrôle indique alors à la fiche électrique branchée sur la prise électrique que cette prise électrique présente de manière certaine les caractéristiques intrinsèques nécessaires pour la charge de la batterie du véhicule automobile avec ce courant de charge de 14 Ampères.

En d'autres termes, la prise électrique communique avec la fiche électrique pour transmettre à cette fiche électrique, qui peut donc transmettre directement au véhicule automobile électrique, un signal de contrôle indiquant la valeur d'intensité maximale du courant que la prise électrique peut délivrer sans être endommagée.

Le véhicule électrique peut alors ajuster la valeur de l'intensité de courant que la batterie de ce véhicule peut tirer de la prise électrique pour le chargement des accumulateurs afin de ne pas dépasser cette valeur de courant maximale.

En pratique, le signal de contrôle est ici un signal binaire : la présence d'un signal de contrôle transmis par la prise électrique indique ici qu'elle est adaptée à fournir un courant d'intensité élevée, égale au maximum à 16 Ampères.

L'absence de signal de contrôle transmis, ou un signal de contrôle nul, indique que la prise électrique est une prise standard qui n'est pas adaptée de manière certaine à délivrer un courant d'intensité supérieur à 8 Ampères sans être endommagée.

Ainsi, lorsque la fiche électrique de la batterie du véhicule électrique transmet un signal de contrôle indiquant que la prise électrique est adaptée à délivrer un courant de 16 Ampères, la charge de la batterie s'effectue dans des conditions optimisées et la batterie du véhicule tire un courant de charge de 14 Ampères pendant la durée habituelle de chargement.

Si la fiche électrique reliant la batterie du véhicule électrique à la prise électrique transmet un signal de contrôle indiquant que la prise électrique n'est pas adaptée de manière certaine à délivrer un courant de 16 Ampères, la batterie du véhicule tire un courant inférieur à 16 Ampères, par exemple égal à 8 Ampères, pendant une durée supérieure à la durée habituelle de chargement, de manière à charger les accumulateurs de la batterie, sans endommager la prise électrique.

Le véhicule pourra ainsi optimiser son temps de charge en fonction de la prise électrique sur laquelle il est connecté, sans mettre en danger l'installation.

En pratique, la fiche électrique 200A ; 200B ; 200C ; 200D ; 400 ; 600 ; 800 ; 1000 est à cet effet adaptée à être enfichée dans la prise électrique 100A ; 100B ; 100C ; 100D ; 300 ; 500 ; 700 ; 900 et comporte des moyens de lecture 230A ; 230B ; 230C ; 230D ; 430 ; 630 ; 830 ; 1030 adaptés à communiquer avec les moyens d'identification 130A ; 130B ; 130C ; 130D ; 330 ; 530 ; 730 ; 930 de la prise électrique et à transmettre ledit signal de contrôle.

Différents modes de réalisation du couple prise électrique et fiche électrique peuvent être envisagés.

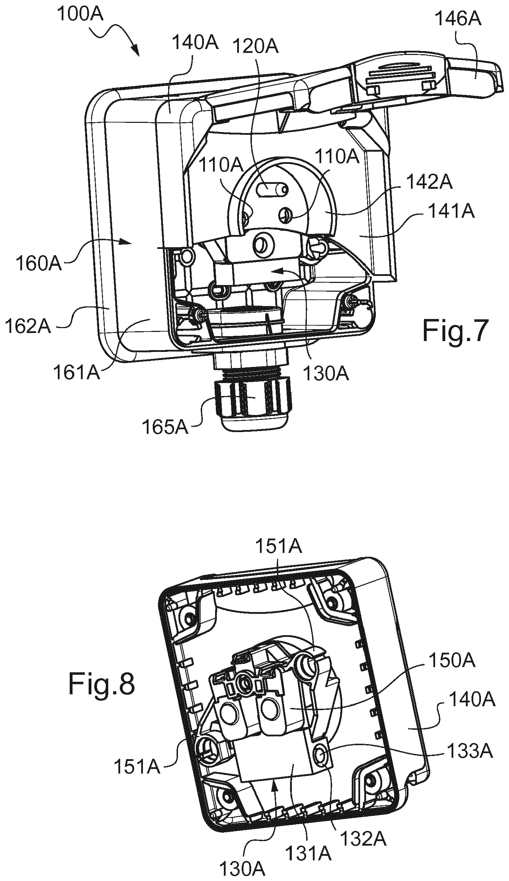

Dans la prise électrique 100A ; 100B ; 100C ; 100D représentée schématiquement sur les figures 1 et 2 et de manière plus précise sur les figures 7 à 11, 16, 20 à 23 et 25 à 27, lesdits moyens d'identification 130A ; 130B ; 130C ; 130D de la prise électrique comportent au moins un aimant 133A ; 133B ; 133C ; 133D.

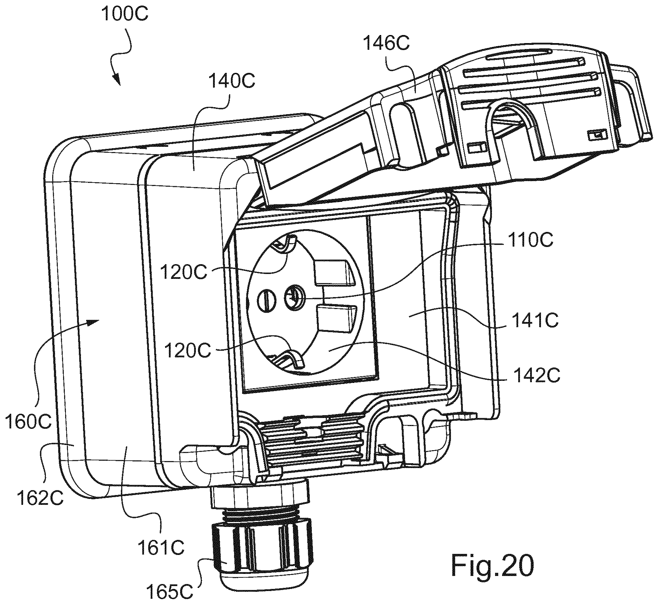

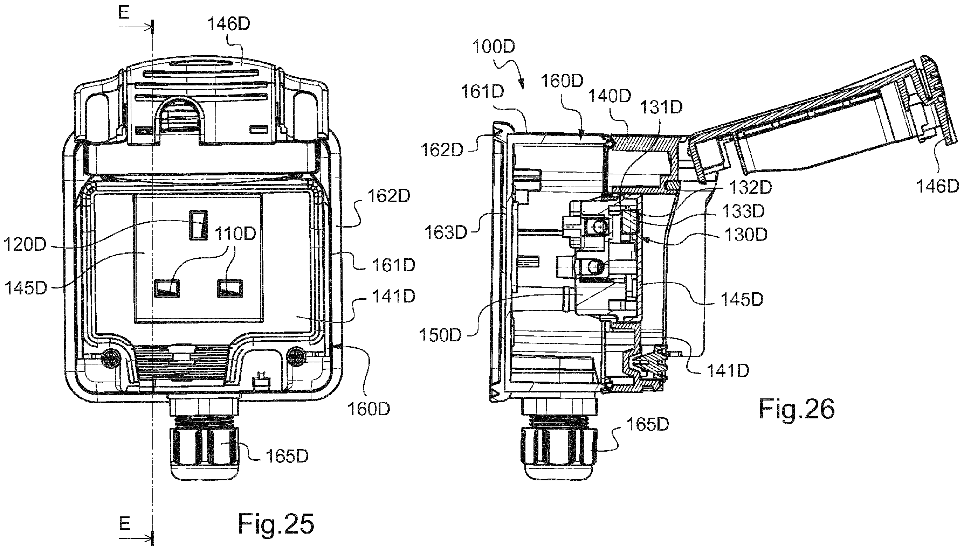

On a représenté aux figures 7 à 11 et 16 deux exemples d'une telle prise électrique conforme à la norme franco-belge, en particulier à la norme NF C 61-314. On a représenté aux figures 20 à 23 un exemple d'une telle prise électrique conforme à la norme allemande DIN 49440 et aux figures 25 à 27 un exemple d'une telle prise conforme à la norme UL ANSI/NEMA WD6.

L'aimant 133A ; 133B ; 133C ; 133D produit un champ magnétique qui constitue le signal de contrôle de la prise électrique 100A ; 100B ; 100C ; 100D. Les moyens d'identification sont donc ici des moyens actifs. Il s'agit ici d'un aimant permanent.

En outre, les prises électriques représentées sur les figures 7 à 11, 16 et 25 à 27 ne comportent qu'un seul aimant. Cependant, il est possible d'envisager d'utiliser une pluralité d'aimants dans chacun de ces exemples de prises électriques. L'exemple de prise électrique représenté sur les figures 20 à 23 comporte par exemple ici deux aimants, comme cela est décrit plus en détail ultérieurement.

La prise électrique 100A ; 100B ; 100C ; 100D comporte un mécanisme d'appareillage 150A ; 150B ; 150C ; 150D et un couvercle enjoliveur 140A ; 140B ; 140C ; 140D rapporté en face avant du mécanisme d'appareillage 150A ; 150B ; 150C ; 150D.

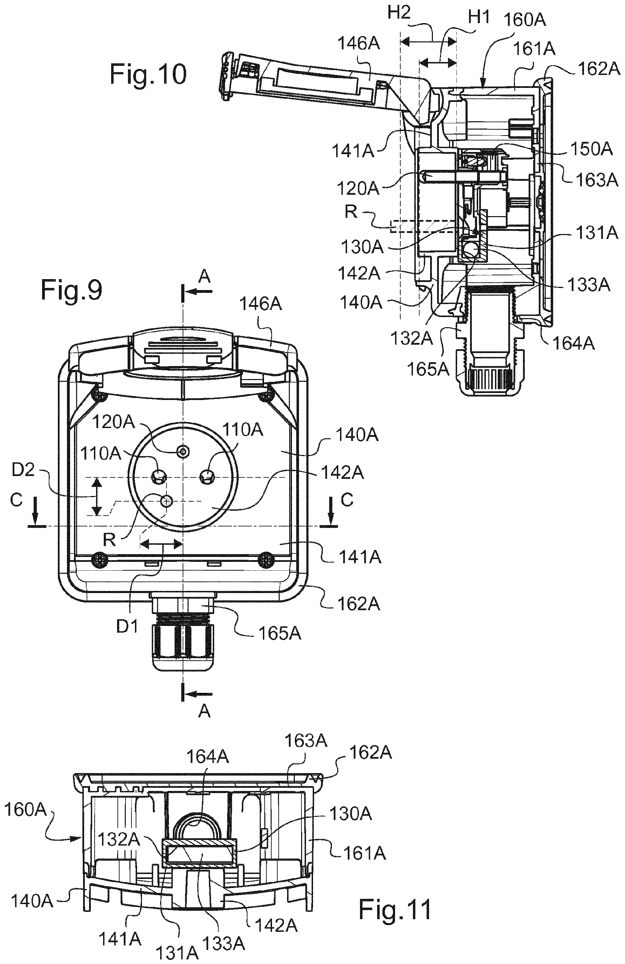

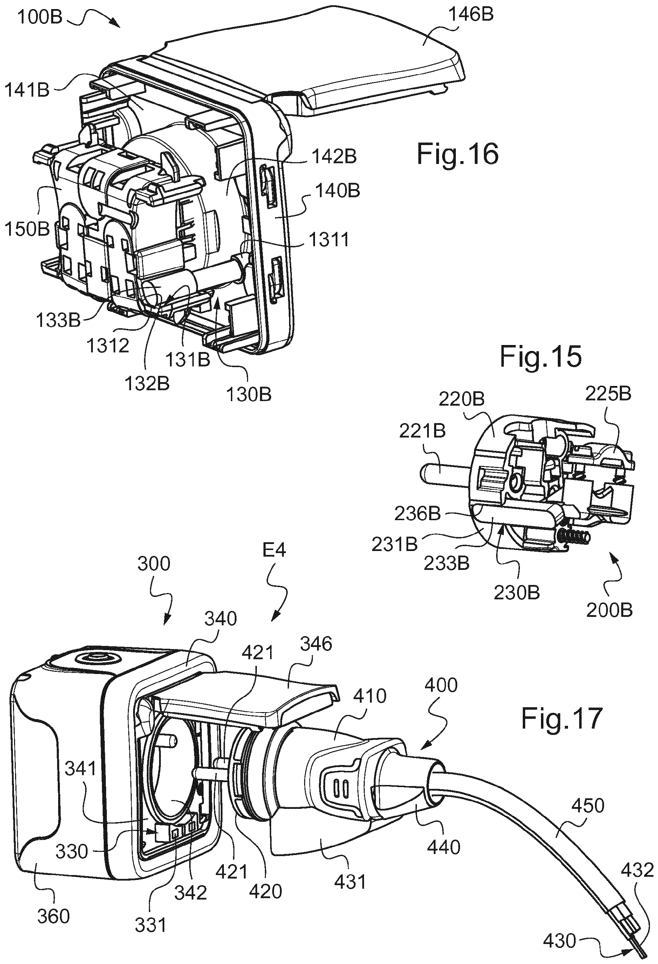

Cette prise électrique 100A ; 100C ; 100D est fermée en face arrière par un boîtier 160A ; 160C ; 160D représenté sur les figures 7, 9 à 11, 20 à 22 et 25, 26. Le boîtier de la prise électrique de la figure 16 n'est pas représenté, mais similaire à celui des figures 9 à 11.

La prise électrique 100A ; 100B ; 100C ; 100D est ici destinée à être montée en saillie sur une paroi de réception. En variante, on peut également envisager que la prise électrique soit montée encastrée dans la paroi de réception.

Selon l'exemple représenté sur les figures 7 à 11, le mécanisme d'appareillage 150A comporte un socle en matière isolante monté dans le boîtier par l'intermédiaire de pattes 151A formant chacune un puits de réception adapté à recevoir un plot de montage complémentaire prévu dans le boîtier (figure 8).

Dans les prises électriques 100A ; 100B ; 100C des figures 7 à 11, 16 et 20 à 23 qui sont conformes aux standards franco-belge et germanique, un enjoliveur 142A ; 142B ; 142C formant le puits de réception de la prise électrique 100A ; 100B ; 100C est rapporté sur l'avant du socle du mécanisme d'appareillage et émerge d'une face avant 141A ; 141B ; 141C du couvercle enjoliveur 140A ; 140B ; 140C (figures 7, 16 et 20).

Dans la prise électrique 100D des figures 25 à 27, conforme au standard UL, une plaque enjoliveur 145D plane comportant, comme expliqué plus loin, les ouvertures d'accès aux bornes de cette prise, est rapportée sur l'avant du socle du mécanisme d'appareillage et s'étend sensiblement dans le plan d'une face avant 141D du couvercle enjoliveur 140D (figures 25 et 26).

Quel que soit le standard de la prise électrique, ici le couvercle enjoliveur 140A ; 140B ; 140C ; 140D comporte en outre un volet 146A ; 146B ; 146C ; 146D monté à pivotement en face avant du couvercle enjoliveur 140A ; 140B ; 140C ; 140D, pour fermer l'accès au puits de réception des prises électriques 100A ; 100B ; 100C de standard franco-belge et allemand, ou pour fermer l'accès aux ouvertures de l'enjoliveur 145D de la prise électrique 100D conforme au standard UL.

Le boîtier 160A ; 160C ; 160D comporte un fond 163A ; 163C ; 163D entouré de quatre parois latérales 161A ; 161C ; 161D s'étendant perpendiculairement à ce fond 163A ; 163C ; 163D (figures 10, 11, 22 et 26).

Le boîtier 160A ; 160C ; 160D est fermé en face avant par le couvercle enjoliveur 140A ; 140C ; 140D. Le fond 163A ; 163C ; 163D est entouré d'un rebord souple 162A ; 162C ; 162D jouant le rôle de joint d'étanchéité entre la prise électrique 100A ; 100C ; 100D et la paroi de réception sur laquelle elle est montée en saillie.

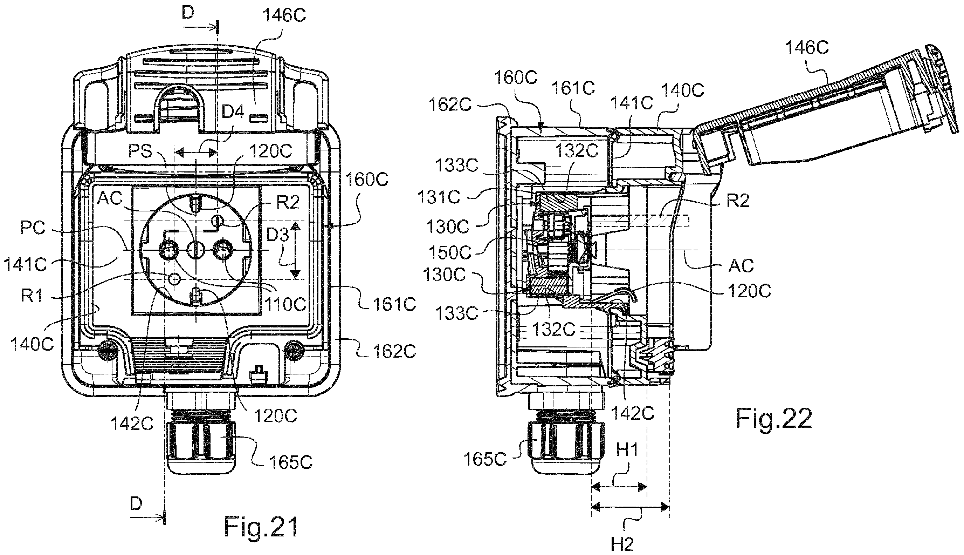

Dans l'exemple de prise électrique représenté sur les figures 10 et 11, l'une des faces latérales 161A du boîtier 160A comporte une ouverture circulaire 164A, dans laquelle est inséré un presse-étoupe 165A par lequel les câbles électriques (non représentés) d'alimentation de la prise électrique 100A pénètrent dans le boîtier 160A. Des ouvertures circulaires similaires sont prévus dans les boîtiers 160C ; 160D des exemples de prises électriques représentées aux figures 21, 22 et 25, 26. Elles accueillent les presses-étoupes 165C ; 165D.

Le boîtier de la prise électrique de la figure 16 est similaire au boîtier 160A des figures 10 et 11 et le couvercle enjoliveur 140C ferme alors la face avant de ce boîtier.

Le socle du mécanisme d'appareillage 150A; 150B ; 150C; 150D enferme de manière classique des bornes adaptées à être connectées électriquement auxdits câbles d'alimentation de phase, de neutre et de terre de la prise électrique 100A ; 100B ; 100C ; 100D.

Dans le cas des prises conformes au standard franco-belge (figure 7 à 11 et 16), une broche 120A connectée à la borne de terre fait saillie dans le puits de réception de la prise électrique.

Dans le cas de la prise conforme au standard germanique (figures 20 à 23), deux lyres 120C connectées à la borne de terre font saillie dans le puits de réception de la prise électrique, le long de la paroi latérale de ce puits.

Dans le cas de la prise électrique 100D conforme au standard UL (figures 25 et 26), un alvéole 120D connecté à une borne de terre est accessible à travers une ouverture ménagée dans la plaque enjoliveur 145D de la prise électrique 100D.

Quel que soit le standard considéré, deux ouvertures ménagées dans le fond du puits de réception de la prise électrique 100A ; 100B ; 100C ou dans la plaque enjoliveur 145D de la prise électrique 100D, donnent accès à des alvéoles 110A ;110C ;110D connectés aux bornes de phase et de neutre de la prise électrique 100A ; 100B ; 100C ; 100D.

Lorsque les raccordements des bornes électriques sont effectués, la prise électrique 100A ; 100B ; 100C ; 100D délivre en permanence le signal électrique sans être endommagée.

Selon le mode de réalisation représenté sur la figure 1, le moyen d'identification 130A ; 130B ; 130C ; 130D comporte le ou les aimants 133A ; 133B ; 133C ; 133D ainsi qu'un support 131A ; 131B ; 131C ; 131D comportant un ou plusieurs logements 132A; 132B; 132C; 132D qui accueillent le ou les aimants 133A ; 133B ; 133C ; 133D (figures 10, 16, 22 et 26).

De manière générale, le ou les aimants 133A ; 133B ; 133C ; 133D sont disposés dans la prise électrique 100A ; 100B ; 100C ; 100D de manière à ce que le champ magnétique émis par cet ou ces aimants 133A ; 133B ; 133C ; 133D présente une valeur minimale donnée dans une zone de l'espace déterminée située en face avant de la prise électrique correspondante.

Ainsi, la prise électrique 100A ; 100B ; 100C ; 100D pourra communiquer avec différentes fiches électriques enfichées sur elle. La fiche électrique utilisée peut en effet posséder des moyens de lecture situés à différents endroits de cette fiche.

Le champ magnétique présente également une valeur maximale souhaitée dans une autre zone de l'espace déterminée située en face avant et/ou autour de la prise électrique, de manière que le champ magnétique émis par le ou les aimants133A ; 133B ; 133C ; 133D contenus dans la prise électrique 100A ; 100B ; 100C ; 100D ne perturbe pas d'autres appareillages électriques situés à proximité, par exemple une autre prise électrique.

Ainsi, il est préférable, en règle générale, de positionner le ou les aimants 133A ; 133B ; 133C ; 133D le plus près possible de la façade de la prise électrique : de cette manière il est possible d'obtenir un champ magnétique suffisamment fort à l'endroit où la fiche électrique est enfichée dans la prise et suffisamment faible à l'extérieur de la prise électrique pour ne pas perturber le fonctionnement d'autres appareillages électriques voisins.

Dans les deux exemples de prise électrique 100A ; 100B conformes au standard franco-belge représentés aux figures 7 à 11 et 16, la position de l'aimant 133A ; 133B et les caractéristiques de son champ magnétique sont déterminées de telle sorte que le champ magnétique émis par cet aimant 133A ; 133B présente les caractéristiques décrites ci-après.

Ces caractéristiques sont déterminées dans une région R de l'espace précise définie de la manière suivante.

La région R de l'espace représentée en traits pointillés et hachurée sur les figures 9 et 10 est une région de forme cylindrique, de diamètre égal à 4,8 millimètres. L'axe de cette région R cylindrique est situé à une distance D1 égale à 7,7 millimètres d'un plan passant par l'axe de la broche 120A connectée à la borne de terre de la prise électrique et perpendiculaire au plan passant par le centre des ouvertures du fond du puits de réception donnant accès aux alvéoles 110A reliés aux bornes de phase et de neutre de la prise électrique 100A.

L'axe de la région R cylindrique d'intérêt est par ailleurs situé à une distance D2 égale à 9,9 millimètre de ce plan passant par le centre des ouvertures du fond du puits de réception donnant accès aux alvéoles 110A reliés aux bornes de phase et de neutre de la prise électrique 100A.

Une région identique peut être définie pour la prise électrique 100B de la figure 16 du même standard.

Dans cette région R cylindrique, au niveau du fond du puits de réception de la prise électrique 100A ; 100B, le champ magnétique émis par l'aimant 133A ; 133B de la prise électrique 100A ; 100B est supérieur à une première valeur seuil égale à 14 milliTesla.

Dans cette région R cylindrique, à une distance H1 égale à 15 millimètres au-dessus du fond du puits de réception de la prise électrique 100A ; 100B, le champ magnétique émis par l'aimant 133A ; 133B de la prise électrique 100A ; 100B est supérieur à une deuxième valeur seuil égale à 2 milliTesla. Cette distance de 15 millimètres du fond du puits de réception de la prise électrique correspond au niveau du bord libre de ce puits de réception dans la prise électrique 100 conforme à la norme franco-belge.

Enfin, dans cette région R cylindrique, à une distance H2 égale à 21 millimètres au-dessus du fond du puits de réception de la prise électrique 100A ; 100B, le champ magnétique émis par l'aimant 133A ; 133B de la prise électrique 100A ; 100B est inférieur à ladite deuxième valeur seuil égale à 2 milliTesla.

Dans la prise électrique 100A, représentée sur les figures 7 à 11, le support 131A est constitué d'une pièce en L, dont une branche forme ledit logement 132A et l'autre branche comporte des moyens de montage par exemple par vissage ou par sertissage, sur le socle du mécanisme d'appareillage 150A.

En variante, le support peut être monté sur le boîtier ou le couvercle enjoliveur de la prise électrique. Cependant, il est avantageux de rendre les moyens d'identification de la prise électrique solidaires du socle du mécanisme d'appareillage afin de former un élément pouvant être inséré dans différents boîtiers de prise électrique.

Il est alors possible de changer le boîtier ou le couvercle enjoliveur de la prise sans avoir besoin de démonter et de remonter les moyens d'identification.

Avantageusement, le logement 132A se présente sous la forme d'une cavité cylindrique et l'aimant 133A se présente sous la forme d'un barreau glissé dans ce logement 132A.

Cet aimant 133A présente par exemple une longueur de 25,4 millimètres, un diamètre de 6,35 millimètres et une force d'adhérence de 1,6 kilogrammes.

Il peut s'agir d'un aimant permanent dont la magnétisation est caractérisée par la référence N42, ce qui signifie que le taux énergétique de l'aimant 133A est de 42 MGOe (Méga Gauss Oersted) et qu'il peut être utilisé jusqu'à une température ambiante de 80 degrés Celsius.

Son revêtement est par exemple en Nickel.

L'aimant 133 est ici disposé à proximité d'une paroi du puits de réception de la prise électrique 100, de manière à être proche de la fiche électrique 200 lorsqu'elle est insérée dans ce puits de réception.

Ici, la forme en L du support 131A permet de maintenir l'aimant 133A le plus près possible du fond du puits de réception de la prise électrique 100A.

L'aimant 133A s'étend ici parallèlement au fond de ce puits de réception de la prise électrique 100A.

La figure 16 montre une variante de cet exemple de réalisation dans laquelle seuls le support et la position de l'aimant 133B sont différents.

En conséquence, la force de l'aimant 133B, c'est-à-dire les caractéristiques du champ magnétique émis par cet aimant 133B, est ajustée de manière à ce que l'intensité de ce champ magnétique dans les régions de l'espace définies précédemment respecte les conditions précitées.

Dans la variante représentée sur la figure 16, le support 131B de l'aimant 133B comprend un berceau 1311 ménagé dans le socle du mécanisme d'appareillage 150B et un manchon 1312 prévu en saillie de la face arrière du couvercle enjoliveur 140B.

Le berceau 1311 et le manchon 1312 accueillent chacun une extrémité de l'aimant 133B, qui s'étend selon l'axe du puits de réception de la prise électrique 100B, perpendiculairement au fond de ce puits de réception.

L'aimant 133B est ici proche de la paroi latérale du puits de réception de la prise électrique 100B.

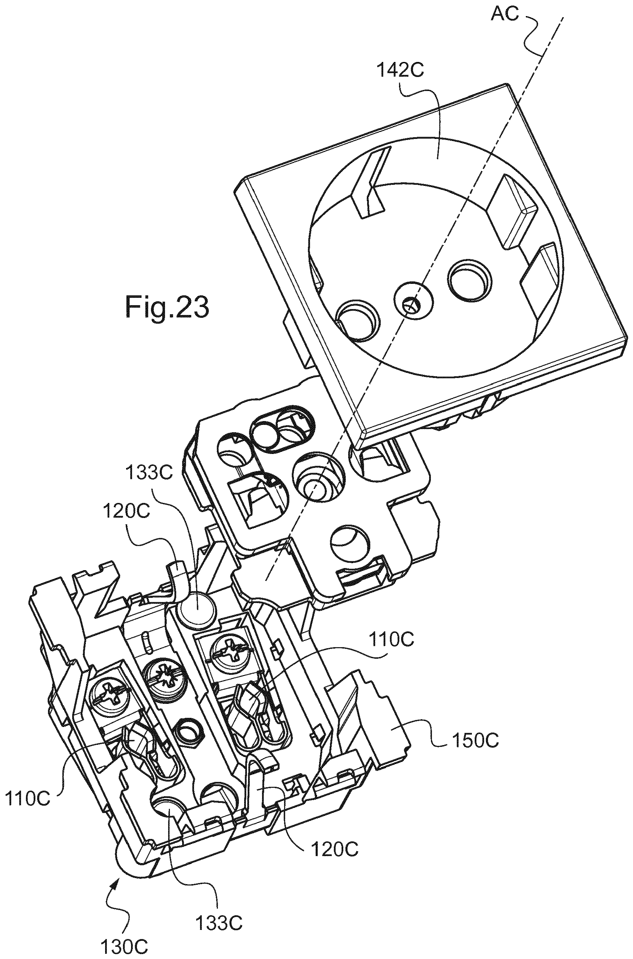

Dans l'exemple de prise électrique 100C de type « schuko » conforme au standard allemand représentée aux figures 20 à 23, il est prévu deux aimants 133C, visibles sur les figures 22 et 23.

La présence de ces deux aimants 133C permet avantageusement la communication de la prise électrique 100C avec la fiche électrique 200C correspondante décrite ultérieurement, quel que soit le sens d'insertion de cette fiche électrique dans la prise électrique.

En effet, la configuration de la prise électrique 100C de type « schuko » est telle qu'elle autorise l'insertion dans son puits d'une fiche orientée selon deux orientations à 180 degrés l'une de l'autre autour de l'axe central du puits de la prise.

Dans ce cas, la position des aimants 133C et les caractéristiques de leur champ magnétique sont déterminées de telle sorte que le champ magnétique émis par ces aimants 133C présente les caractéristiques décrites ci-après.

Ces caractéristiques sont déterminées dans deux régions R1 et R2 de l'espace précises, définies de la manière suivante.

Les régions R1 et R2 de l'espace représentées en traits pointillés et hachurées sur les figures 21 et 22 sont deux régions de forme cylindrique, de diamètre égal à 4,8 millimètres. Les axes de ces régions R1 et R2 sont espacés d'une distance D3 égale à 19,8 millimètres selon une direction perpendiculaire à un plan PC passant par le centre des ouvertures du fond du puits de réception donnant accès aux alvéoles 110C reliés aux bornes de phase et de neutre de la prise électrique 100C, et espacés d'une distance D4 égale à 15,4 millimètres selon une direction parallèle à ce plan PC passant par le centre des ouvertures du fond du puits de réception donnant accès aux alvéoles 110C connectés aux bornes de phase et de neutre de la prise électrique 100C. Le plan contenant les deux axes de ces régions R1 et R2 passe par un axe central AC de la prise électrique 100C défini par l'intersection du plan PC défini précédemment et d'un plan PS de symétrie des lyres 120C reliées à la borne de terre.

En d'autres termes, ces deux axes sont symétriques par rapport à un point situé sur cet axe central AC.

Dans chacune des ces régions R1, R2 cylindriques, au niveau du fond du puits de réception de la prise électrique 100C, le champ magnétique émis par les aimants 133C de la prise électrique 100C est supérieur à ladite première valeur seuil égale à 14 milliTesla.

Dans chacune des ces régions R1, R2 cylindriques, à la distance H1 égale à 15 millimètres au-dessus du fond du puits de réception de la prise électrique 100C, le champ magnétique émis par les aimants 133C de la prise électrique 100C est supérieur à ladite deuxième valeur seuil égale à 2 milliTesla.

Enfin, dans chacune des ces régions R1, R2 cylindriques, à une distance H2 égale à 21 millimètres au-dessus du fond du puits de réception de la prise électrique 100C, le champ magnétique émis par les aimants 133C de la prise électrique 100C est inférieur à ladite deuxième valeur seuil égale à 2 milliTesla.

Dans l'exemple représenté sur les figures 20 à 23, le support 131C des aimants 133C est constitué par le socle du mécanisme d'appareillage 150C, dans lequel sont ménagés deux logements 132C.

Chaque logement 132C se présente sous la forme d'une cavité cylindrique et l'aimant 133C correspondant se présente sous la forme d'un barreau glissé dans ce logement 132C.

Chaque aimant 133C s'étend ici perpendiculairement au fond du puits de réception de la prise électrique 100C.

Les deux aimants 133C sont disposés dans la prise électrique 100C selon des directions symétriques par rapport à l'axe central AC de la prise électrique défini précédemment. Ils peuvent être disposés à des profondeurs différentes sous le fond du puits de réception de la prise électrique 100C. Cependant, comme précédemment, ils sont de préférence disposés le plus près possible de ce fond.

Enfin, dans le cas de la fiche électrique conforme au standard américain des figure 25 et 26, il est prévu un seul aimant 133D dont le support 131D est constitué par le socle du mécanisme d'appareillage 150D, dans lequel est ménagé un logement 132D.

L'aimant 133D se présente sous la forme d'un barreau glissé dans ce logement 132D, dont l'axe s'étend ici parallèlement à la plaque enjoliveur 145D qui ferme le mécanisme d'appareillage 150D. L'aimant 133D est ici maintenu au plus près de cette plaque enjoliveur 145D, dans l'un des coins du socle du mécanisme d'appareillage 150D. L'aimant 133D est ici au contact de la face interne de la plaque enjoliveur 145D orientée vers l'intérieur du mécanisme d'appareillage 150D.

Les fiches électriques 200A ; 200B ; 200C représentées sur les figures 12 à 15 et 24 sont adaptées à coopérer avec les prises électriques 100A ; 100B conformes au standard franco-belge.

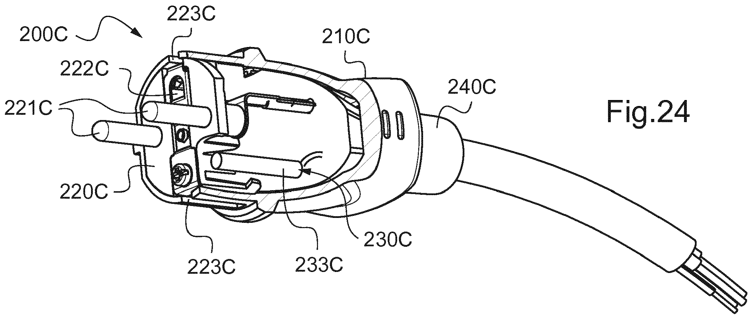

La fiche électrique 200C représentée sur la figure 24 est en outre adaptée à coopérer avec la prise électrique 100C conforme au standard germanique.

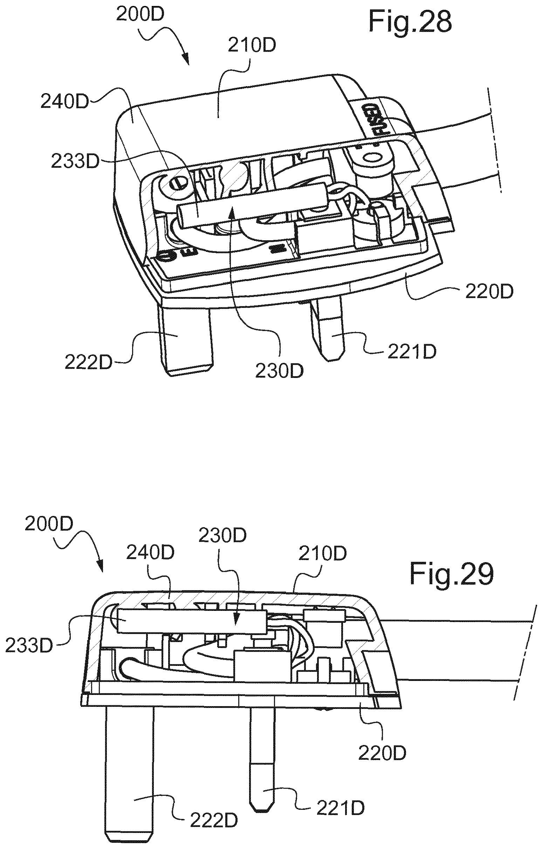

Enfin, la fiche électrique 200D représentée sur les figures 28 et 29 est adaptée à coopérer avec la prise électrique 100D conforme au standard UL.

Chaque fiche électrique 200A ; 200B ; 200C ; 200D comporte de manière classique un corps 210A ; 210C ; 210D (non représenté sur la figure 15) isolant qui loge deux broches 221A; 221B ; 221C ; 221D métalliques de connexion électrique émergeant d'une partie avant 220A ; 220B ; 220C ; 220D du corps et adaptées à être enfichées dans les alvéoles 110A ; 110C ; 110D connectés aux bornes de phase et de neutre de la prise correspondante.

Ce corps 210A ; 210C ; 210D est réalisé en matériau isolant, par exemple par moulage de matière plastique.

Dans le cas des fiches électriques 100A ; 100B ; 100C représentée sur les figures 12 à 15 et 24, ladite partie avant 220A; 220B ; 220C se présente sous la forme d'un corps cylindrique de révolution autour de l'axe longitudinal dudit corps, fermé à l'avant par une paroi avant à travers laquelle lesdites broches 221A ; 221B ; 221C font saillie selon des directions parallèles à l'axe longitudinal du corps 210A ; 210C.

Ladite partie avant 220A ; 220B ; 220C comporte également un logement qui débouche dans la paroi avant par une ouverture. Ce logement loge un alvéole 222A ; 222C adapté à recevoir la broche 120A de la prise électrique de standard franco-belge insérée au travers de ladite ouverture, afin de connecter la fiche électrique 200A ; 200B ; 200C à la terre.

La partie avant 220C de la fiche électrique 200C qui est également adaptée à coopérer avec la prise électrique 100C conforme au standard allemand comporte en outre deux rainures diamétralement opposées 223C accueillant des éléments de contact électriques adaptés à coopérer avec les lyres 120C de la prise électrique 100C qui émergent latéralement dans le puits de réception de cette prise, pour connecter la fiche électrique 200C à la terre.

Le corps 210A ; 210C de la fiche électrique 200A ; 200C est prolongé à l'arrière par un élément arrière 240A ; 240C à travers lequel passent les câbles électriques reliant la fiche électrique 200A ; 200C à un appareil électrique (non représenté).

Dans le cas de la fiche électrique 100D représentée sur les figures 28 et 29, le corps 210D de la fiche électrique 200D présente une forme globalement parallélépipédique.

La partie avant 220D se présente sous la forme d'une plaque fermant une partie arrière 240D parallélépipédique à travers laquelle passent les câbles électriques reliant la fiche électrique 200D à un appareil électrique (non représenté).

La partie avant 220D de la fiche électrique 200D adaptée à coopérer avec la prise électrique 100D conforme au standard américain comporte trois ouvertures à travers lesquelles font saillie trois broches 221D, 222D adaptées à être enfichées dans les alvéoles 110D, 120D connectés aux bornes correspondantes de la prise électrique 100D.

Ces trois broches 221D, 222D s'étendent selon des directions perpendiculaires au plan de la partie avant 220D.

Les moyens de lecture 230A de la fiche électrique 200A représentée sur les figures 12 à 14 comportent un support annulaire 231A au travers duquel passent lesdits câbles électriques de la fiche électrique 200A et un interrupteur à lames souples 233A monté sur ce support annulaire 231A. Ils comportent également un circuit électrique secondaire relié à cet interrupteur à lames souples 233A.

On entend ici par circuit électrique secondaire un circuit électrique de la fiche électrique distinct du circuit électrique principal reliant les broches de la fiche électrique à l'appareil électrique correspondant.

Le circuit électrique secondaire peut être un circuit électrique connecté en entrée et en sortie de l'interrupteur à lames souples 233A à l'appareil électrique, c'est-à-dire ici au véhicule automobile, ou à un détecteur de tension ou de courant de tout type capable de détecter le passage d'un courant à travers l'interrupteur à lames souples 233A.

Il peut également s'agir d'un circuit secondaire connecté d'un côté de l'interrupteur à lames souples 233A à l'appareil électrique et de l'autre à l'alvéole 222A connecté à la borne de terre de la fiche électrique.

Le support annulaire 231A remplace le serre-câble habituellement logé dans le corps 210A, à l'arrière de la partie avant 220A.

L'interrupteur à lames souples 233A comprend deux lames de contact qui sont écartées en l'absence d'un champ magnétique et qui viennent au contact l'une de l'autre en présence d'un champ magnétique de sens quelconque. Ces deux lames sont disposées dans un tube de verre rempli d'un gaz inerte les protégeant contre l'oxydation.

Le pouvoir de coupure de cet interrupteur à lames souples 233A correspond au courant maximal pouvant le traverser sans endommager les lames souples et est compris entre 1 milliampère et 4 Ampères. Le temps d'enclenchement de cet interrupteur à lames souples 233A, correspondant au temps mis par les lames pour venir au contact l'une de l'autre en présence d'un champ magnétique, est d'environ 0,5 milliseconde.

Ici l'interrupteur à lames souples 233A est partiellement logé dans un logement 232A se présentant sous la forme d'un orifice cylindrique ménagé dans le support annulaire 231A (figure 14).

Cet orifice cylindrique s'étend longitudinalement, dans l'épaisseur du support annulaire 231A.

Une partie de l'interrupteur à lames souples 233A fait saillie du support annulaire 231A, vers l'avant de la fiche électrique 200A (figures 12 à 14).

Cet interrupteur à lames souples 233A s'étend ici parallèlement à l'axe des broches 221A, c'est-à-dire parallèlement à l'axe longitudinal du corps 210A de la fiche électrique 200A.

L'extrémité libre de l'interrupteur à lames souples 233A se trouve ainsi très proche de la paroi avant de la partie avant 220A de la fiche électrique 200A.

Lorsque la fiche électrique 200A est insérée dans la prise électrique 100A ; 100B, la face avant de la partie avant 220A de la fiche électrique 200A est plaquée contre le fond du puits de réception de la prise électrique 100A ; 100B, et ainsi l'interrupteur à lames souples 233A est positionné à proximité de l'aimant 133A ;133B des moyens d'identification 130A ; 130B de la prise électrique 100A ; 100B.

L'interrupteur à lames souples 233A est alors plongé dans le champ magnétique produit par l'aimant 133A ; 133B de la prise électrique 100A ; 100B et passe de sa position ouverte, dans laquelle les lames souples sont écartées, à une position fermée dans laquelle les lames souples sont en contact, ce qui autorise la circulation d'un courant électrique dans le circuit électrique secondaire de la fiche électrique 200A.

Le passage d'un courant dans ce circuit électrique secondaire (non représenté) permet de transmettre à l'appareil électrique relié à la fiche électrique 200A le signal de contrôle déterminé en fonction du signal électrique délivré par la prise électrique 100A sur laquelle il est branché. Il indique ici que la prise électrique est adaptée de manière certaine à délivrer un signal électrique d'intensité maximale égale à 16 Ampères sans être endommagée.

En variante, l'interrupteur à lames souples peut être disposé de manière différente dans la fiche électrique, toujours à proximité de la face avant de la partie avant de la fiche électrique.

La fiche électrique 200B représentée sur la figure 15 constitue une variante de cet exemple de réalisation de la fiche électrique adaptée à coopérer avec les prises électriques 100A ; 100B conformes au standard franco-belge.

Dans cette variante, l'interrupteur à lames souples 233B de la fiche électrique 200B est logé dans une enveloppe oblongue qui est glissée et maintenue dans une fente 236B ménagée dans une partie avant 220B du corps 210B de la fiche électrique 200B, parallèlement à l'axe longitudinal de la fiche électrique. Cette fente 236B est ici ménagée dans une partie périphérique de la partie avant 220B.

Dans ce cas, le support 231B de l'interrupteur à lames souples 233B est constitué par la partie avant 220B de la fiche électrique 200B. La fiche électrique 200B comporte au surplus de manière classique un serre-câble 225B disposé à l'arrière de la partie avant 220B, dans le corps 210B.

Les moyens de lecture 230C de la fiche électrique 200C représentée sur la figure 24 et adaptée à coopérer avec les prises électriques de standard franco-belge ou allemand, et les moyens de maintien des moyens de lecture 230C dans cette fiche électrique 200C (non représentés sur la figure 24) peuvent être similaires en tout point à ceux décrits en référence aux figures 12 à 15.

Il s'agit ici d'un interrupteur à lames souples 230C orienté parallèlement aux broches 221C de la fiche électrique 200C.

Les moyens de lecture 230D de la fiche électrique 200D représentée sur les figures 28 et 29 et adaptée à coopérer avec la prise électrique de standard américain sont similaires à ceux décrits en référence aux figures 12 à 15. Il s'agit d'un interrupteur à lame souple logé dans la partie arrière 240D de la fiche électrique. Cet interrupteur à lames souples est ici disposé perpendiculairement aux broches 221D de cette fiche électrique 200D.

Quel que soit le standard de la fiche électrique considérée, on peut en outre envisager de remplacer l'interrupteur à lames souples par un capteur à effet Hall. Ce capteur à effet Hall émet un signal électrique lorsqu'il est plongé dans un champ magnétique. Ce signal électrique est donc émis lorsque le capteur à effet Hall est approché de l'aimant de la prise électrique, ce qui se produit inévitablement lorsque la fiche électrique est insérée dans la prise électrique. Le signal électrique émis par le capteur à effet Hall est alors transmis par le circuit électrique secondaire de la fiche électrique à l'appareil électrique.

Avantageusement, la fiche électrique 200A ; 200B ; 200C ; 200D est tout à fait adaptée à être utilisée avec une prise électrique classique 10 (figure 2) de standard approprié, ne comportant aucun moyens d'identification, ou comportant des moyens d'identification non compatibles avec ses moyens de lecture.

Comme cela est représenté sur la figure 2, aucun signal de contrôle n'est alors transmis à la fiche électrique, puisque les moyens de lecture de celle-ci ne détectent aucun champ magnétique.

A l'inverse, la prise électrique 100A ; 100B ; 100C ; 100D selon l'invention est également adaptée à recevoir des fiches électriques classiques ne comportant pas de moyens de lecture.

Selon un exemple représenté sur les figures 3 et 17, la prise électrique 300 comporte des moyens d'identification 330 actifs émettant un signal de contrôle lumineux.

Les moyens d'identification de la prise électrique 300 comportent ici une source lumineuse 330 qui peut être alimentée soit par une alimentation indépendante de l'alimentation des bornes de la prise électrique 300, soit par une dérivation de l'alimentation de cette prise électrique 300.

Il s'agit par exemple d'une diode électroluminescente.

Comme représenté sur la figure 17, la prise électrique 300 comporte, comme la prise électrique conforme au mode de réalisation précité, un boîtier 360 logeant un mécanisme d'appareillage. Ce boîtier 360 est fermé en face avant par un couvercle enjoliveur 340. Il est prévu un enjoliveur 342 qui émerge de la face avant 341 du couvercle enjoliveur 340 et qui forme le puits de réception de la prise électrique 300 et un volet 346 monté à pivotement sur le couvercle enjoliveur 340, pour fermer l'accès au puits de réception de la prise électrique 300.

La source lumineuse 330 est logée dans le boîtier 360, en regard d'une ouverture 331 de la face avant 341 du couvercle enjoliveur 340.

En variante, la source lumineuse éclaire un guide de lumière, par exemple une fibre optique, qui achemine le faisceau lumineux émis par la source lumineuse jusqu'à une ouverture de la face avant du couvercle enjoliveur.

En variante encore, le faisceau lumineux émis par la source lumineuse émerge par une ouverture située dans le fond du puits de réception de la prise électrique.

La fiche électrique 400 adaptée à recevoir ce signal de contrôle émis par cette prise électrique 300 comporte ici des moyens de lecture 430 comportant un guide de lumière, ici une fibre optique 432, et un détecteur de lumière (non représenté).

Cette fiche électrique 400 comporte par ailleurs comme précédemment un corps 410 prolongé à l'arrière par un élément arrière 440 et fermé à l'avant par une partie avant 420 dont émerge les broches de connexion 421 de la fiche électrique 400 (figure 17).

La fibre optique 432 débouche à l'extérieur de la fiche électrique 400 à un endroit se situant, lorsque la fiche électrique 300 est insérée dans la prise électrique 400, en vis-à-vis de l'ouverture 331 de la prise électrique 300 à travers laquelle émerge le faisceau lumineux émis par la source lumineuse 330 de la prise électrique 300.

Ici, la fibre optique 432 s'étend dans la fiche électrique 400 selon l'axe longitudinal du corps 410 de la fiche électrique avec les câbles électriques d'alimentation 450 correspondants, puis s'écarte légèrement de l'axe longitudinal du corps : elle traverse une protubérance 431 du corps 410 de la fiche électrique 400 et débouche sur une face de cette protubérance 431 qui est plaquée contre la face avant 341 du couvercle enjoliveur 340, en regard de l'ouverture 331, lorsque la fiche électrique 400 est insérée dans la prise électrique 300.

En variante, la fibre optique 432 peut déboucher à n'importe quel endroit de la surface externe de la fiche électrique, pourvu que cet endroit soit disposé en vis-à-vis de l'ouverture de la prise électrique par laquelle émerge le faisceau lumineux émis par la source lumineuse de la prise électrique.

Ainsi, lorsque la fiche électrique 400 est insérée dans la prise électrique 300, le faisceau lumineux émis par la source lumineuse 330 de la prise électrique 300 pénètre dans la fibre optique 432.

Il est acheminé par cette fibre optique 432 jusqu'à un détecteur de lumière qui est ici déporté à distance de la fiche électrique 400, dans l'appareil électrique.

En variante, le détecteur de lumière peut également être logé dans le corps isolant de la fiche électrique elle-même.

Ce détecteur de lumière émet alors un signal électrique qui est envoyé à l'appareil électrique connecté à la prise électrique 300 par la fiche électrique 400.

Le signal de contrôle lumineux émis par la prise électrique est ainsi converti en un signal de contrôle électrique qui indique par exemple à l'appareil électrique que la prise électrique est adaptée à délivrer un courant d'intensité maximale égale à 16 Ampères.

On peut envisager en variante que la prise électrique comporte une pluralité de sources lumineuses, allumées en fonction des caractéristiques du signal électrique délivré par la prise électrique à un instant donné.

La fiche électrique complémentaire comporte alors au moins un guide de lumière, et de préférence autant de guides de lumière que de sources lumineuses présentes dans la prise électrique. Ces guides de lumière acheminent les faisceaux lumineux émis par les sources lumineuses jusqu'à un ou plusieurs détecteurs de lumière.

Il est alors possible de transmettre à l'appareil électrique plusieurs informations relatives au signal électrique délivré par la prise électrique.

Selon un exemple représenté sur les figures 4, 18 et 19, la prise électrique 500 comporte des moyens d'identification 530 passifs.

Ces moyens d'identification comportent un réflecteur de lumière 530, par exemple un miroir 530.

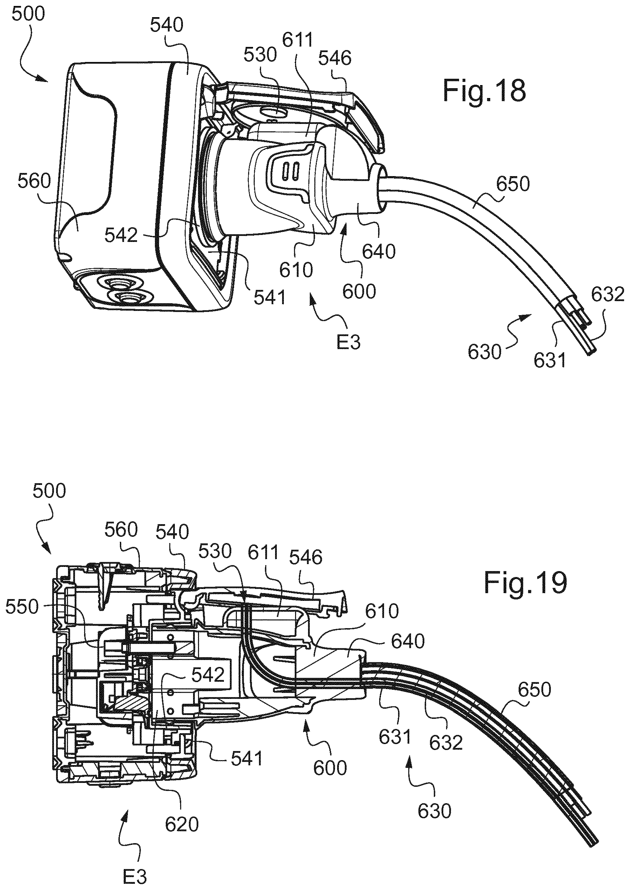

Comme représenté sur les figures 18 et 19, la prise électrique 500 comporte, comme les autres prises électriques décrites précédemment, un boîtier 560 logeant un mécanisme d'appareillage 550 (figure 19). Le boîtier 560 est fermé en face avant par un couvercle enjoliveur 540. Il est prévu un enjoliveur 542 qui émerge de la face avant 541 du couvercle enjoliveur 540 et qui forme le puits de réception de la prise électrique et un volet 546 monté à pivotement sur le couvercle enjoliveur 540 pour fermer l'accès au puits de réception de la prise électrique 500.

Le miroir 530 est ici disposé, par exemple collé, sur la face interne du volet 546, orienté vers le puits de réception de la prise électrique 500 lorsque ce volet 546 est fermé.

Ce miroir 530 est disposé de telle sorte qu'il est adapté à réfléchir un faisceau lumineux émis par la fiche électrique 600 complémentaire vers un détecteur de lumière de cette fiche électrique.

Plus précisément, les moyens de lecture 630 de la fiche électrique 600 adaptée à coopérer avec la prise électrique 500 comportent ici deux guides de lumière se présentant sous la forme de deux fibres optiques 631, 632, une source lumineuse (non représentée) et un détecteur de lumière (non représenté).

La fiche électrique 600 comporte comme précédemment un corps 610 fermé en face avant par une partie avant 620 dont émerge les broches de connexion 621 de la fiche électrique (figure 19).

Les fibres optiques 631, 632 pénètrent ici longitudinalement dans le corps 610 de la fiche électrique 600 avec les câbles électriques 650 reliant la fiche électrique 600 à l'appareil électrique correspondant, à travers une partie arrière 640 de la fiche (figure 19).

Elles émergent latéralement, à travers une bosse 611 du corps 610 de la fiche électrique située du côté du volet 546 lorsque la fiche électrique 600 est insérée dans la prise électrique 500.

Cette bosse 611 permet de maintenir en place l'une des extrémités de chaque fibre optique 631, 632 et de repousser le volet 546 de la prise électrique 500.

Ainsi, cette extrémité de chaque fibre optique 631, 632 débouche en vis-à-vis du miroir 530.

L'autre extrémité de l'une des fibres optiques 631 est reliée à la source lumineuse (non représentée), par exemple une diode électroluminescente, tandis que l'autre extrémité de l'autre fibre optique 632 est reliée au détecteur de lumière.

La source lumineuse et le détecteur de lumière sont ici déportés en dehors du corps de la fiche électrique, au niveau de l'appareil électrique.

En variante, on peut envisager qu'ils soient logés dans le corps de la fiche électrique.

Lorsque la fiche électrique 600 est insérée dans la prise électrique 500, le volet 546 est repoussé par la bosse 611 du corps 610 de la fiche électrique et maintenu par cette bosse 611 dans une orientation prédéterminée par rapport à la fiche électrique 600.

Le faisceau lumineux émis par la fibre optique 631 reliée à la source lumineuse est réfléchi par le miroir 530 et éclaire l'extrémité de l'autre fibre optique 632.

Le signal de contrôle est ici le faisceau lumineux réfléchi.

Le faisceau lumineux réfléchi est acheminé par l'autre fibre optique 632 jusqu'au détecteur de lumière. Celui-ci convertit alors le signal de contrôle lumineux en un signal de contrôle électrique qui est transmis à l'appareil électrique. Il lui indique par exemple que la prise électrique est adaptée à délivrer un courant d'intensité maximale égale à 16 Ampères de manière certaine.

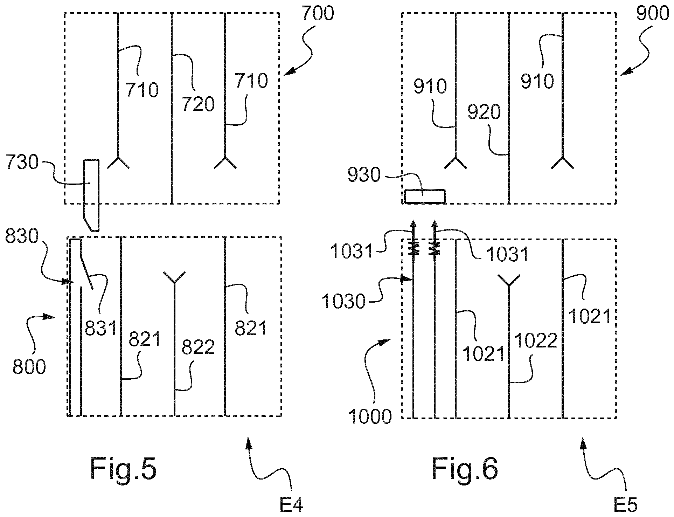

Selon un exemple représenté sur la figure 5, lesdits moyens d'identification de la prise électrique 700 comportent un élément poussoir 730, par exemple une tige, faisant saillie de la face avant du couvercle enjoliveur ou du fond du puits de réception de la prise électrique 700.

Ces moyens d'identification sont donc des moyens passifs.

La figure 5 montre de manière schématique les bornes 710, 720 de la prise électrique 700.

Les moyens de lecture 830 de la fiche électrique complémentaire 800 comportent ici un circuit électrique secondaire et un interrupteur mécanique 831.

L'élément poussoir 730 est adapté à actionner cet interrupteur mécanique 831 de la fiche électrique complémentaire 800 lorsque celle-ci est insérée dans la prise électrique. De préférence, il s'agit d'un élément poussoir ne conduisant pas l'électricité.

La figure 5 montre de manière schématique les broches 821 de la fiche électrique 800 et la borne de terre 822.

L'actionnement de cet interrupteur mécanique 831 ferme le circuit électrique secondaire de la fiche électrique 800 et autorise le passage d'un courant électrique dans ce circuit secondaire.

Le passage de ce courant électrique transmet le signal de contrôle à la fiche électrique.

Selon un exemple représenté sur la figure 6, lesdits moyens d'identification de la prise électrique 900 comportent un élément de contact électrique 930, par exemple une plaque métallique, accessible en face avant du couvercle enjoliveur ou au fond du puits de réception de la prise électrique 900. Ces moyens d'identification sont donc des moyens passifs.

Cette plaque métallique 930 peut être par exemple montée à l'intérieur de la prise électrique et accessible à travers une ouverture du couvercle enjoliveur ou du fond de l'enjoliveur, ou être disposée à l'extérieur de la prise électrique, par exemple collée en face avant du couvercle enjoliveur ou au fond du puits de réception de la prise électrique 900.

Cette plaque métallique 930 n'est pas connectée électriquement aux câbles d'alimentation de la prise électrique 900.

La figure 6 montre de manière schématique les bornes 910, 920 de la prise électrique 900.

Les moyens de lecture 1030 de la fiche électrique complémentaire 1000 comportent un circuit électrique secondaire ouvert sur deux tiges métalliques 1031.

La plaque métallique 930 est adaptée à établir un contact électrique entre les deux tiges métalliques 1031 de la fiche électrique complémentaire 1000 lorsque celle-ci est insérée dans la prise électrique 900.

Ces tiges métalliques 1031 font saillie d'une partie avant de la fiche électrique 1000, en regard de la plaque métallique 930.

Ce faisant, le circuit électrique secondaire de la fiche électrique 1000 est fermé et un courant électrique circule dans ce circuit secondaire. Le passage de ce courant électrique constitue le signal de contrôle transmis à la fiche électrique 1000.

La figure 6 montre de manière schématique les broches 1021 et la borne de terre 1022 de la fiche électrique 1000.

Le signal de contrôle permet à la fiche électrique 200A ;200B ; 200C ; 200D ; 400 ; 600 ; 800 ; 1000 de distinguer la prise électrique 100A ; 100B ; 100C ; 100D ; 300 ; 500 ; 700 ; 900 d'une autre prise électrique délivrant un signal électrique de caractéristiques différentes. Par exemple, il permet de distinguer une prise électrique adaptée de manière certaine à délivrer un signal électrique de fort ampérage d'une prise électrique dont les caractéristiques intrinsèques sont incertaines lorsque les moyens d'identification sont installés sur une prise électrique dont les caractéristiques intrinsèques font qu'elle est adaptée à délivrer un courant de fort ampérage.

L'appareil électrique peut en conséquence ajuster son fonctionnement, par exemple en limitant le courant tiré de la prise électrique pour son fonctionnement à la valeur maximale d'intensité que la prise électrique peut délivrer sans être endommagée.

On peut en outre envisager de combiner plusieurs des exemples décrits ci-dessus, en prévoyant différents types de moyens d'identification sur une même prise électrique et un ou plusieurs moyens de lecture sur la fiche électrique associée.

## Revendications

1. Prise électrique (100C) présentant des caractéristiques intrinsèques données pour être adaptée à délivrer en permanence sans être endommagée un signal électrique qui présente une intensité maximale déterminée, et comportant un mécanisme d'appareillage (150C) et un enjoliveur (142C) rapporté sur l'avant d'un socle du mécanisme d'appareillage (150C) et formant un puits de réception, **caractérisée en ce qu'**elle comporte des moyens d'identification (130C) adaptés à communiquer ou à coopérer avec une fiche électrique (200) pour générer un signal de contrôle représentatif de ladite intensité maximale dudit signal électrique délivré par la prise électrique sans être endommagée, dans laquelle lesdits moyens d'identification (130C) comportent deux aimants (133C) portés par le socle du mécanisme d'appareillage (150C) et disposés selon des directions symétriques par rapport à un axe central (AC) de la prise électrique (100C).

2. Prise électrique (100C) selon la revendication 1, dans laquelle lesdits aimants (133C) sont disposés dans le boîtier (160C) de la prise électrique (100C), à proximité d'une paroi du puits de réception de la prise électrique (100C).

## Patentansprüche

1. Elektrische Steckdose (100C), die bestimmte ihr eigene Eigenschaften aufweist, um dazu ausgelegt zu sein, dauerhaft und ohne beschädigt zu werden, ein elektrisches Signal abzugeben, das eine bestimmte maximale Stärke aufweist, und die einen Vorrichtungsmechanismus (150C) und eine auf der Vorderseite eines Sockels des Vorrichtungsmechanismus (150C) angebrachte und eine Aufnahmesenke bildende Abdeckkappe (142C) aufweist, **dadurch gekennzeichnet, daß** sie Identifizierungsmittel (130C) aufweist, die dazu ausgelegt sind, mit einem elektrischen Stecker (200) zu kommunizieren oder zusammenzuwirken, um ein Steuersignal zu erzeugen, das für die maximale Stärke des von der elektrischen Steckdose ohne beschädigt zu werden abgegebenen elektrischen Signals repräsentativ ist, wobei die Identifizierungsmittel (130C) zwei vom Sockel des Vorrichtungsmechanismus (150C) getragene und in zu einer zentralen Achse (AC) der elektrischen Steckdose (100C) symmetrischen Richtungen angeordnete Magnete (133C) aufweisen.

2. Elektrische Steckdose (100C) gemäß Anspruch 1, bei der die Magnete (133C) im Gehäuse (160C) der elektrischen Steckdose (100C) in der Nähe einer Wandung der Aufnahmesenke der elektrischen Steckdose (100C) angeordnet sind.

## Claims

1. A socket outlet (100C) presenting given intrinsic characteristics so as to be suitable for delivering continuously, and without being damaged, an electrical signal that presents a determined maximum current, and including an equipment mechanism (150C) and a trim (142C) that is fitted on the front of a base of the equipment mechanism (150C) and that forms a reception well, the socket outlet being **characterized in that** it includes identification means (130C) that are adapted to communicate or to co-operate with an electric plug (200) so as to generate a pilot signal that is representative of said maximum current of said electrical signal that can be delivered by the socket outlet without being damaged, wherein said identification means (130C) comprise two magnets (133C) that are carried by the base of the equipment mechanism (150C) and that are arranged along directions that are symmetrical about a central axis (AC) of the socket outlet (100C).

2. A socket outlet (100C) according to claim 1, wherein said magnets (133C) are arranged in the casing (160C) of the socket outlet (100C), in the proximity of a wall of the reception well of the socket outlet (100C).
